# EUROPEAN PATENT APPLICATION

(11) **EP 4 761 405 A1**
(43) Date of publication of application: **17.06.2026**
(21) Application number: 23948713.5
(22) Date of filing: 11.08.2023
(51) Int. Cl.: H04W 72/044, H04B 17/318, H04L 5/00

(54) **INFORMATION TRANSCEIVING METHOD AND APPARATUS, AND COMMUNICATION SYSTEM**

(71) Applicant: 1FINITY Inc., Kawasaki-shi, Kanagawa 211-8588 (JP)
(72) Inventor: SUN, Gang, Beijing 100022 (CN); WANG, Xin, Beijing 100022 (CN)
(74) Representative: Haseltine Lake Kempner LLP
(86) International application number: PCT/CN2023/112590
(87) International publication number: WO 2025/035275

(57) **Abstract**

Embodiments of this disclosure provide an information transceiving method and apparatus. The method includes: transmitting reference signal set configuration information and reporting configuration information by a network device to a terminal equipment, wherein the reference signal set includes a first reference signal set and/or a second reference signal set; and receiving a first report from the terminal equipment.

## Description

### Technical Field

This disclosure relates to the field of communication technologies.

### Background

As low-frequency spectrum resources become scarce, the millimeter wave frequency band can provide greater bandwidth and has become an important frequency band for 5G New Radio (NR) systems. Millimeter waves have different propagation characteristics from legacy low-frequency bands due to its shorter wavelength, such as a higher propagation loss, poor reflection and diffraction performance, etc. Therefore, larger antenna arrays are usually used to form shaped beams with greater gain, which overcome propagation losses, and ensure system coverage. 5G NR standards have designed a series of solutions for beam management, including beam scanning, beam measurement, beam report, and beam indication, etc. However, when the number of transceiving beams is relatively large, a payload and latency of the system will be greatly increased.

With the development of artificial intelligence (AI) technologies, applying the AI technologies to a physical layer of wireless communication to solve difficulties of legacy methods has become a current technological direction. For beam management, using AI models to predict a spatially optimal beam pair according to results of a small number of beam measurements may significantly reduce the payload and latency of the system.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In a legacy beam measurement report, a network device configures a reference signal set for beam measurement of a terminal equipment, and performs corresponding configuration on report of the measurement, wherein the report configuration contains information of the reference signal set, indicating that the terminal equipment measures quality of reference signals in the reference signal set, and reports it to the network device. The terminal equipment measures the quality of the reference signals according to the configuration of the network device, and reports a report quantity to the network device. At this time, the report quantity is a measured quantity according to the measurement. Wherein, reported contents include the measured quantity and a reference signal resource indicator to which the measured quantity corresponds.

If an AI model is deployed at the terminal equipment side and the network device configures a reference signal set for beam measurement, the terminal equipment may measure reference signals in the reference signal set to obtain the measured quantity, and use the measured quantity as inputs to the AI model to obtain a predicted quantity. The report quantity reported by the terminal equipment may be the measured quantity or the predicted quantity. However, when the reported report quantity is a predicted quantity, a reference signal resource indicator to which the predicted quantity corresponds needs also to be reported. However, a case will occur where reference signals or beams (pairs) to which the predicted quantity corresponds are not included in the reference signal set used for beam measurement. Therefore, the reference signal resource indicator is unable to indicate the reference signals or beams (pairs) to which the predicted quantity corresponds.

In order to solve at least one of the above problems, embodiments of this disclosure provide an information transceiving method and apparatus and a communication system.

According to one aspect of the embodiments of this disclosure, there is provided an information transceiving apparatus, applicable to a terminal equipment, the apparatus including:
a first transmitting unit configured to transmit reference signal set configuration information and reporting configuration information to a terminal equipment, the reference signal set including a first reference signal set and/or a second reference signal set; and
a first receiving unit configured to receive a first report from the terminal equipment.

According to another aspect of the embodiments of this disclosure, there is provided an information transceiving apparatus, applicable to a network device, the apparatus including:
a second receiving unit configured to receive reference signal set configuration information and reporting configuration information transmitted by the network device, the reference signal set including a first reference signal set and/or a second reference signal set; and
a second transmitting unit configured to transmit a first report to the network device.

According to a further aspect of the embodiments of this disclosure, there is provided a communication system, including a terminal equipment and/or a network device, the terminal equipment including the information transceiving apparatus as described in the one aspect, and the network device including the information transceiving apparatus as described in the other aspect.

An advantage of the embodiments of this disclosure exists in that with the above embodiments, the network device establishes association between the measurement set of the reference signals and the prediction set of the reference signals via the second indication information, such that the terminal equipment, in reporting the report quantity, is able to correctly indicate the information of beams (pairs) to which the report quantity corresponds, i.e. reference signal resources in the reference prediction set, thereby solving the above problems in the related art. Or, the terminal equipment, by newly adding the third indication information to a reporting instance, indicates the reference signal set to which the reference signal resource indication corresponding to the report quantity corresponds, such that the terminal equipment, in reporting the report quantity, is able to correctly indicate the information of beams (pairs) to which the report quantity corresponds, i.e. reference signal resources in the reference prediction set, thereby solving the above problems in the related art.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of a communication system of embodiments of this disclosure;
FIG. 2 is a schematic diagram of an information transceiving method of embodiments of this disclosure;
FIG. 3 is a schematic diagram of an information transceiving method of embodiments of this disclosure;
FIG. 4 is a schematic diagram of an information transceiving method of embodiments of this disclosure;
FIG. 5 is a schematic diagram of an information transceiving apparatus of embodiments of this disclosure;
FIG. 6 is a schematic diagram of an information transceiving apparatus of embodiments of this disclosure;
FIG. 7 is a schematic diagram of a network device of embodiments of this disclosure; and
FIG. 8 is a schematic diagram of a terminal equipment of embodiments of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G new radio (NR) and 6G in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, transmitting or receiving a PUSCH may be understood as transmitting or receiving uplink data carried by the PUSCH, transmitting or receiving a PUCCH may be understood as transmitting or receiving uplink information carried by the PUCCH, transmitting or receiving a PRACH may be understood as transmitting or receiving a preamble carried by the PRACH. The uplink signal may include an uplink data signal and/or an uplink control signal, etc., and may be referred to as uplink transmission or uplink information or an uplink channel. Transmitting uplink transmission on an uplink resource may be understood as transmitting the uplink transmission by using the uplink resource. Likewise, downlink data/signal/channel/information may be understood correspondingly.

In the embodiments of this disclosure, higher-layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, media access control (MAC) signaling, or an MAC control element (MAC CE); however, this disclosure is not limited thereto.

Scenarios in the embodiments of this disclosure shall be described below by way of examples; however, this disclosure is not limited thereto.

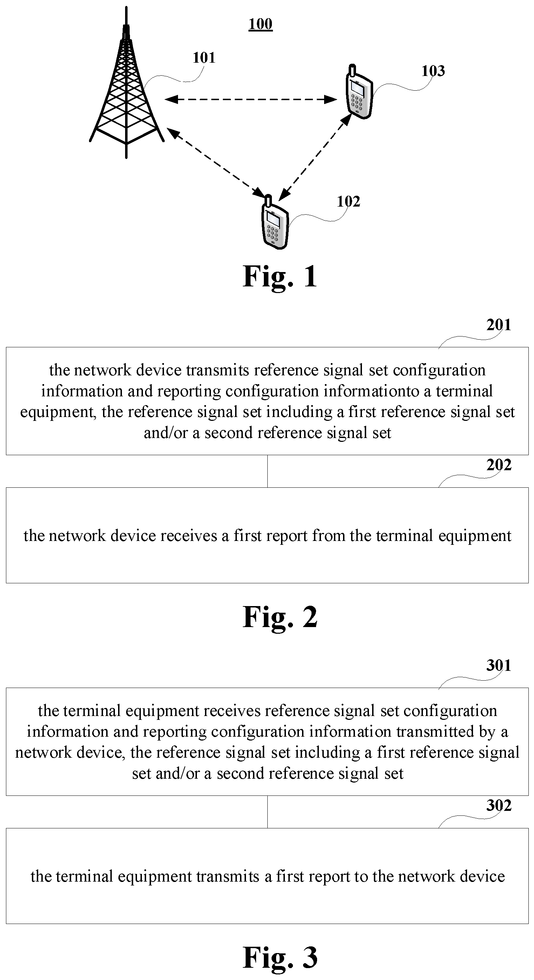

FIG. 1 is a schematic diagram of a communication system of embodiments of this disclosure, in which a case where terminal equipments and a network device are taken as examples is schematically shown. As shown in FIG. 1, the communication system 100 may include a network device 101 and terminal equipments 102, 103. For the sake of simplicity, an example having only two terminal equipments and one network device is schematically given in FIG. 1; however, the embodiments of this disclosure are not limited thereto.

In the embodiments of this disclosure, existing services or services that may be implemented in the future may be performed between the network device 101 and the terminal equipments 102, 103. For example, such services may include but not limited to an enhanced mobile broadband (eMBB), massive machine type communication (mMTC), and ultra-reliable and low-latency communication (URLLC), etc.

The terminal equipment 102 may transmit data to the network device 101, such as in a granted or grant-free transmission manner. The network device 101 may receive data transmitted by one or more terminal equipments 102 and feed back information to the terminal equipment 102, such as acknowledgement (ACK)/non-acknowledgement (NACK) information. According to the feedback information, the terminal equipment 102 may acknowledge end of a transmission process, or may perform new data transmission, or may perform data retransmission.

It should be noted that FIG. 1 shows that two terminal equipments 102, 103 are both in coverage of the network device 101. However, this disclosure is not limited thereto, and the two terminal equipments 102, 103 may not be in coverage of the network device 101, or one terminal equipment 102 is in coverage of the network device 101 and the other terminal equipment 103 is out of coverage of the network device 101.

An AI model (or an ML model) includes but is not limited to an input layer (input), multiple convolutional layers, a concatenation layer (concat), a fully connected layer (FC), and a quantizer, etc., and processing results of the multiple convolutional layers are merged in the concatenation layer. Reference may be made to existing techniques for a specific structure of the AI model, which shall not be repeated herein any further.

In 5G and 6G systems, a wide range of UE features are defined. Not all features must be supported by the terminal equipment. The network understands support of the features by the UE via a terminal equipment capability, i.e. UE capability query and reporting, so that the network may understand the UE capability and provide a basis for its subsequent scheduling and configuration of the terminals and communication therewith.

In order to support the diversity of terminal functions, existing standards define multiple features for terminals. Each feature further predefines one or more feature groups, each feature group predefining one or more components, and identifiers or sequence numbers are defined for the features, feature groups and components. According to the current 5G-Advanced and 6G technology trends, when a UE capability may possibly support multiple AI/ML functions or models, corresponding features or feature groups may be predefined for the AI/ML functions or models.

When an AI/ML model is applied to beam management, such as beam spatial domain prediction, and beam time domain prediction, etc., they may be respectively predefined as a feature, such as an AI/ML feature of beam spatial domain prediction, and an AI/ML feature of beam time domain prediction, etc., or support of an AI/ML model performing beam management may be predefined as a feature, and one or more feature groups may be predefined, such as an AI/ML feature group of beam spatial domain prediction, and an AI/ML feature group of beam time domain prediction, etc. How to define an AI/ML function or model as a feature or a feature group is not limited in this disclosure.

In a function-based lifecycle management process, when the terminal supports multiple AI/ML functions, one AI/ML function may be defined by an AI/ML feature or an AI/ML feature group.

In a model-based lifecycle management process, when the terminal supports multiple AI/ML models, one AI/ML model may be defined by an AI/ML feature or an AI/ML feature group.

The above AI/ML functions or models and related parameters may be specified by predefining features or feature groups, for common understanding by the network side and terminal side in communicating capability information.

In the embodiments of this disclosure, a function or a model may also be referred to as a feature or a feature group, and different features or feature groups contain corresponding parameters or application conditions. Different features or feature groups may have identifiers (IDs) or corresponding indices or logical IDs.

In this way, when the terminal supports multiple AI/ML functions or models, the functions or models may be distinguished by a function and/or a model ID or a logical ID, or may be distinguished by an ID or a sequence number of the feature or feature group.

In the function-based lifecycle management process, in order to realize a certain function, the terminal equipment may be specifically implemented by one AI/ML model or multiple AI/ML models, or multiple functions may be implemented by one AI/ML model, and a specific implementation does not need to be informed to the network device.

In the function-based lifecycle management process, when a function is implemented by multiple models, different models may correspond to different scenarios, different sites, different cells, different configurations, and different application conditions, etc., which are determined by a training and development process of the models.

In the following embodiment, "a reference signal", "a beam (pair)" and "a reference signal resource" are interchangeable.

It was found by the inventors that when an AI model is deployed at a side of the terminal equipment to predict beams (pairs), there exist two types of reference signal sets, including: a measurement set of reference signals and a prediction set of the reference signals, wherein the measurement set of the reference signals refers to a set of reference signals used for beam measurement (i.e. a set of reference signals to which a measured quantity of a model input corresponds), and the prediction set of the reference signals refers to a set of reference signals to which a beam predicted quantity corresponds (i.e. a set of reference signals to which a predicted quantity of the model output corresponds).

For example, there exist at least following two prediction scenarios where: (1) an AI model outputs a predicted quantity of all beams (pairs) by using a measured quantity of a part beams (pairs), and at this time, the measurement set of the reference signals is a subset of the prediction set; (2) when the AI model outputs a predicted quantity of fine beams by using a measured quantity of wide beams (SSBs), the measurement set of the reference signals is an SSB signal set, and the prediction set of the reference signals is a CSI-RS signal set. Therefore, the measurement set of the reference signals and the prediction set of the reference signals are not the same reference signal set.

When the terminal equipment reports the predicted quantity to the network device, reference signal resource indicators corresponding to the predicted quantity correspond to the prediction set of the reference signals, rather than measurement set of the reference signals. However, according to definitions in existing standards, reference signal resource indication is performed based on the measurement set of the reference signals. As the measurement set and prediction set of the reference signals are not the same set, it will occur that the reference signals or beams (pairs) to which the predicted quantity corresponds are not included in the measurement set. Thus, the reference signals or beams (pairs) to which the predicted quantity corresponds are unable to be indicated in reporting the predicted quantity.

In order to solve the above problems, embodiments of this disclosure provide an information transceiving method and apparatus and a communication system, which shall be described below with reference to the accompanying drawings and embodiments.

### Embodiments of a first aspect

The embodiments of this disclosure provide an information transceiving method, which shall be described from a network device side.

FIG. 2 is a schematic diagram of the information transceiving method of the embodiments of this disclosure. As shown in FIG. 2, the method includes:
201: a network device transmits reference signal set configuration information and reporting configuration information to a terminal equipment, the reference signal set including a first reference signal set and/or a second reference signal set; and
201: the network device receives a first report from the terminal equipment.

It should be noted that FIG. 2 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 2.

In some embodiments, the network device may configure multiple reference signal (resource) sets for the terminal equipment, and the reference signal may be a CSI-RS and/or an SSB, etc. For example, the configured reference signal sets is a reference signal list, and each reference signal set consists of one or more reference signals, in other words, the network device may transmit reference signal configuration information to the terminal equipment, the reference signal configuration information including an identifier of the reference signal set and identifier/identifiers of one or more reference signals constituting the reference signal set.

For example, when the reference signals are SSBs, the reference signal configuration information may be carried by an SSB resource set configuration information element CSI-SSB-ResourceSet, including an identifier csi-SSB-ResourceSetId of the reference signal set. For example, when the reference signals are CSI-RSs, the reference signal configuration information may be carried by a non-zero power CSI-RS resource set configuration information element NZP-CSI-RS-ResourceSet, including an identifier nzp-CSI-ResourceSetId of the reference signal set; or, the reference signal configuration information may be carried by an information element CSI-ResourceConfig, including configuration information of one or more reference signal sets. Reference may be made to relevant technologies for data formats of the information elements, which shall not be illustrated here one by one, and the embodiments of this disclosure are not limited thereto.

In some embodiments, in addition to the reference signal configuration information, the network device may further transmit the reporting configuration information to the terminal equipment. In the reporting configuration information (such as carried by an information element CSI-ReportConfig), a reporting configuration identifier and a reporting configuration type may be included, including three types, periodic, semi-periodic semiPersistentOnPUCCH/semiPersistentOnPUSCH, and aperiodic, a report quantity type (such as L1-RSRP (L1 reference signal receiving power) or L1-SINR (L1 signal to interference plus noise ratio)), and an identifier/identifiers of the reference signal set. The identifier(s) of the reference signal set is/are one or more of reference signal set identifiers in the reference signal configuration information.

The above reference signal configuration and reporting configuration may further include other information, and reference may be made to relevant technologies for details, which are not limited in the embodiments of this disclosure.

In some embodiments, the reference signal set configured by the reference signal configuration information includes a first reference signal set and/or a second reference signal set. The first reference signal set may be used for beam measurement, and the second reference signal set may be used for beam prediction. That is, the first reference signal set is a measurement set of the reference signals, and the second reference signal set is a prediction set of the reference signals; or, the second reference signal set may be used for beam measurement, and the first reference signal set may be used for beam prediction. That is, the second reference signal set is a measurement set of the reference signals, and the first reference signal set is a prediction set of the reference signals. However, the embodiments of this disclosure are not limited thereto, and the first reference signal set and the second reference signal set may also be used for functions of other beam management, which shall not be illustrated herein any further. The first reference signal set and the second reference signal set may be CSI-RS reference signal sets and/or SSB reference signal sets.

In some embodiments, in order to facilitate distinguishing usage of the above reference signal sets, the network device may further transmit first indication information to the terminal equipment, the first indication information indicating that the first reference signal set is at least used for beam measurement or for beam prediction. The first indication information may be carried by a radio resource control (RRC) signaling or a media access control (MAC) control element (CE) or downlink control information (DCI), which may be existing or newly added. For example, the first indication information may be carried by the above reference signal configuration information element or reporting configuration information element, and the embodiments of this disclosure is not limited thereto.

For example, the first indication information may be newly-added information of 1 bit in the reference signal configuration information element. When a bit value of the 1 bit is 1, it indicates that the first reference signal set configured in the reference signal configuration information element is a measurement set of the reference signals used for beam measurement, when a bit value is 0, it indicates that the first reference signal set configured in the reference signal configuration information element is a prediction set of the reference signals used for beam prediction, and vice versa.

For example, the first indication information may be newly-added information of 1 bit in the reporting configuration information element. When a bit value of the 1 it is 1, it indicates that the first reference signal set configured in the reporting configuration information element is a measurement set of the reference signals used for beam measurement, and when a bit value is 0, it indicates that the first reference signal set configured in the reference signal configuration information element is a prediction set of the reference signals used for beam prediction, and vice versa.

What described above is illustrative only, and new signaling may also be designed to carry the first indication information, which shall not be illustrated herein any further.

In some embodiments, a relationship between the first reference signal set and the second reference signal set may be configured between the terminal equipment and the network device via additional signaling. More specifically, the network device configures association information for the two types of reference signal sets needed by the AI model of the terminal equipment, which shall be described below in detail.

In some embodiments, the network device transmits second indication information to the terminal equipment, the second indication information indicating more than one second reference signal set, the more than one second reference signal set being associated with the first reference signal set, wherein the more than one second reference signal set being associated with the first reference signal set indicates that more than one second reference signal set is related (or correspond to or match with or are paired with) to the first reference signal set. That is, the second indication information may indicate more than one prediction set of reference signals associated with the measurement set of the reference signals, or the second indication information may indicate more than one measurement set of reference signals associated with the prediction set of the reference signals, thereby establishing a correspondence relationship (association relationship or matching relationship or pairing relationship) between the measurement set of the reference signals and the prediction set of the reference signals. For example, the measurement set of the reference signals and the prediction set of the reference signals correspond respectively to input and output of the AI model at the terminal equipment side, and that the measurement set of the reference signals and the prediction set of the reference signals (the first reference signal set and the second reference signal set) are associated may mean that the measurement set of the reference signals and the prediction set of the reference signals correspond to input and output of an AI model. It may also be said that when the measurement set of the reference signals and the prediction set of the reference signals correspond to input and output of an AI model, the measurement set of the reference signals is related to (associated with or correspond to or match with or is paired with) the prediction set of the reference signals.

In some embodiments, for different first reference signal sets, they may be associated with identical second reference signal sets (with identical numbers and identifiers), or they may be associated with different second reference signal sets (with different numbers and/or identifiers); however, the embodiments of this disclosure are not limited thereto. How to determine which reference signal sets (fourth reference signal sets) may (are able to) be associated with the first reference signal set shall be described below.

In some embodiments, more than one (N) fourth reference signal set with which the first reference signal set is associated is obtained at least via a feature/feature group of the terminal equipment or a capability report of the terminal equipment. The more than one (M) second reference signal set is a part (M is less than N) or all (M is equal to N) of reference signal sets in the more than one (N) fourth reference signal set; where, M and N are integers greater than or equal to 1. That is, the first reference signal set obtained via the feature/feature group of the terminal equipment or the capability report of the terminal equipment may (is able to) be associated with N fourth reference signal sets. When using the second indication information to indicate the second reference signal set, M fourth reference signal sets may be selected or configured from the N fourth reference signal sets according to its implementation algorithm and are taken as M second reference signal sets associated with the first reference signal set.

In some embodiments, when parameters of one or more AI models and/or functions are defined via the features/feature groups of the terminal equipment or in the capability report of the terminal, after obtaining corresponding model parameters (such as dimensions of the inputs and outputs of the AI models, and a pattern of the measurement set, etc.), the network device determines whether different reference signal sets may be correlated or may be taken as inputs and outputs of the AI models according to the model parameters.

For example, if there are two AI models at the terminal equipment side, an input dimension of one of the AI models is 16, an output dimension thereof is 64, an input dimension of the other AI model is 16, and an output dimension thereof is 128, for a reference signal set (a measurement set, the first reference signal set) with a dimension of 16, a reference signal set (the fourth reference signal set) that may be associated obtained via the feature/feature group of the terminal equipment or the capability report of the terminal equipment is a reference signal set (prediction set) with dimensions of 64 and 128. The network device may select or configure reference signal sets with dimensions of 64 and 128 (all the fourth reference signal sets) and take them as two second reference signal sets associated with the first reference signal set, and it may also select or configure a reference signal set with a dimension of 64 from two fourth reference signal sets and take it as a second reference signal set associated with the first reference signal set according to their implementation algorithms (such as when the network device expects that the AI model for beam prediction of the terminal equipment is able to obtain better prediction accuracy).

For example, if there are two AI models at the terminal equipment side, an input dimension of one of the AI model is 16, an output dimension thereof is 64, an input dimension of the other AI model is 32, and an output dimension thereof is 64, for a reference signal set (a measurement set, the first reference signal set) with a dimension of 64, a reference signal set (the fourth reference signal set) that may be associated obtained via the feature/feature group of the terminal equipment or the capability report of the terminal equipment is a reference signal set (measurement set) with dimensions of 16 and 32. The network device may select or configure the reference signal sets with dimensions of 16 and 32 (all the fourth reference signal sets) and take them as two second reference signal sets associated with the first reference signal set, and it may also select or configure a reference signal set with a dimension of 16 from two fourth reference signal sets and take it as a second reference signal set associated with the first reference signal set according to their implementation algorithms (such as when the terminal equipment expects that the AI model for beam prediction of the terminal equipment is able to more lower payloads of the reference signals).

In some embodiments, the second indication information may be carried by a radio resource control signaling (RRC) or a media access control (MAC) control element (CE) or downlink control information (DCI), which may be existing or newly added, and are not limited in the embodiments of this disclosure. For example, the second indication information may be carried by the above reference signal configuration information element or reporting configuration information element, which shall be illustrated below.

For example, the network device may add the second indication information to the reference signal configuration information element to establish an association between the first reference signal set and the second reference signal set. In the information element CSI-SSB-ResourceSet, the existing identifier csi-SSB-ResourceSetId of the reference signal set may be regarded as the identifier of the first reference signal set. The second indication information is added to the information element CSI-SSB-ResourceSet to be associated with more than one second reference signal set, which may be a CSI-RS reference signal set; or, in the information element NZP-CSI-RS-ResourceSet, the existing identifier nzp-CSI-ResourceSetId of the reference signal set may be regarded as the identifier of the first reference signal set. The second indication information is added to NZP-CSI-RS-ResourceSet to be associated with more than one second reference signal set, which may be an SSB reference signal set or a CSI-RS reference signal set; or, in the information element CSI-ResourceConfig, the reference signal set list csi-RS-ResourceSetList may be regarded as more than one first reference signal set. In CSI-ResourceConfig, more than one second indication information may be added to indicate more than one associated second reference signal set for each first reference signal set respectively, the second reference signal set being an SSB reference signal set or a CSI-RS reference signal set. In the above example, when multiple first reference signal sets are configured, one second indication information may be respectively added for a configuration of each first reference signal set to indicate the one or more second reference signal sets associated with each first reference signal set.

For example, the network device may add the second indication information to the reporting configuration information element to establish the association between the first reference signal set and the second reference signal set. In the reporting configuration information element, the existing identifier of the reference signal set may be regarded as the identifier of the first reference signal set, and the second indication information may be added to be associated with more than one second reference signal set, and the second reference signal set may be an SSB reference signal set or a CSI-RS reference signal set.

What described above is illustrative only, and new signaling may also be designed to carry the second indication information, which shall not be illustrated herein any further.

In some embodiments, the second indication information is at least an identifier of a reference signal set, or is a bitmap, which shall be illustrated below.

For example, the second indication information is represented by the identifier of the reference signal set, the identifier being the identifier of the reference signal set in the reference signal configuration information element, such as NZP-CSI-RS-ResourceSetId or CSI-SSB-ResourceSetId. There may be identifier(s) of one or more second reference signal sets in the second indication information. For example, the second indication information is represented by a bitmap, and a length of the bitmap is related to a configured maximum number of reference signal sets. For example, the length (number of bits) of the bitmap is equal to the configured maximum number of reference signal sets, and each bit corresponds to one reference signal set (for example, a position or sequence number of the bit in the bitmap corresponds to an identifier of the reference signal set). A bit value of the bitmap is used to indicate whether a corresponding reference signal set is the second reference signal set or not, or, in other words, each bit value is used to indicate whether a corresponding reference signal set is the second reference signal set associated with the first reference signal set. For example, when the bit value is a first specific value, it indicates that the corresponding reference signal set is the associated second reference signal set, and when the bit value is a second specific value, it indicates that the corresponding reference signal set is not the associated second reference signal set. Which bits are set to be the first specific value may be determined according to identifiers of the second reference signal set. For example, if the identifiers of the second reference signal set are 1, 3, 5, a bit value to which bits in the bitmap at positions 2, 4 and 6 correspond is the first specific value. For example, the first specific value is 1 and the second specific value is 0, or the first specific value is 0 and the second specific value is 1; however, the embodiments of this disclosure are not limited thereto. When there are more than one first specific value in the bitmap, it indicates that the first reference signal set is associated with multiple second reference signal sets, and when there is one first specific value in the bitmap, it indicates that the first reference signal set is associated with one second reference signal set.

In some embodiments, when the first reference signal set is an SSB reference signal set, more than one second reference signal set associated therewith are CSI-RS reference signal sets. That is, the first reference signal set and the second reference signal set are reference signal sets of different types. When the first reference signal set is a CSI-RS reference signal set, more than one second reference signal set associated therewith may be SSB reference signal sets. That is, the first reference signal set and the second reference signal set are reference signal sets of different types. Or, when the first reference signal set is a CSI-RS reference signal set, more than one second reference signal set associated therewith may be CSI-RS reference signal sets, and the first reference signal set and the second reference signal sets are reference signal sets of identical types. As described above, the first reference signal set and the second reference signal set correspond to different sets, and when the first reference signal set and the second reference signal set are reference signal sets of identical types, identifiers of reference signal sets of them are different, and they may be distinguished by the identifiers of reference signal sets. However, when the first reference signal set and the second reference signal set are reference signal sets of different types, the identifiers of reference signal sets of them may be identical. In other words, when the network device configures two types of reference signal sets, if the second reference signal set is indicated based on an identifier of a reference signal set, a type of reference signal set to which the identifier corresponds is unable to be determined. Therefore, in the embodiments of this disclosure, the network device may further transmit or not transmit fourth indication information to the terminal equipment. The fourth indication information is used to indicate that a type of a reference signal in the second reference signal set is or is not identical to a type of a reference signal in the first reference signal set, the type of the reference signal is a CSI-RS or an SSB; or, the fourth indication information is used to indicate the type of reference signals in the second reference signal set is an SSB or a CSI-Rs. The fourth indication information may be carried by a radio resource control signaling (RRC), a media access control (MAC) control unit (CE), or downlink control information (DCI), which may be existing or newly added. For example, the fourth indication information and the second indication information may be carried by identical information elements, or by different information elements, and the embodiments of this disclosure are not limited thereto.

In some embodiments, when the network device does not transmit the fourth indication information, it indicates that the type of reference signals in the second reference signal set is identical to the type of reference signals in the first reference signal set, and when the network device transmits the fourth indication information, it indicates that the type of reference signals in the second reference signal set is different from the type of reference signals in the first reference signal set, thereby indicating the type of the reference signals in the second reference signal set, and vice versa.

In some embodiments, the network device transmits the fourth indication information, which is represented by 1 bit. When a bit value of the 1 bit is 1, it indicates that the type of the reference signals in the second reference signal set is an SSB, and when the bit value of the 1 bit is 0, it indicates that the type of the reference signals in the second reference signal set is a CSI-RS, and vice versa.

For example, the network device configures N1 SSB reference signal sets CSI-SSB-ResourceSetId for the terminal equipment, which are 0~N1-1, respectively. Furthermore, the network device configures N2 reference signal sets NZP-CSI-RS-RourceSetId of NZP CSI-RS for the terminal equipment, which are 0~N2-1, respectively. In a reference signal configuration for a CSI-RS reference signal set with an ID of 0, the second indication information and the fourth indication information are further included. The second indication information is {1,3,5}, and a bit value of the fourth indication information is 0, which indicates that the CSI-RS reference signal set with an ID of 0 (first reference signal set) is associated with an SSB reference signal set with IDs of 0 1,3,5 (second reference signal set); or, in the reference signal configuration for the CSI-RS reference signal set with an ID of 0 (first reference signal set), the second indication information is further included, which is {1,3,5}. As the fourth indication information is not included, it indicates that the type of the second reference signal set is identical to the type of the first reference signal set, that is, it indicates that the CSI-RS reference signal set with an ID of 0 (first reference signal set) is associated with CSI-RS reference signal sets with IDs of 1,3,5 (second reference signal sets), which shall not be illustrated herein one by one.

Or, in the reference signal configuration of the CSI-RS reference signal set with an ID of 0 (first reference signal set), the second indication information is further included, which is {1,3,5}. A bit value of the fourth indication information is 0, which indicates that the CSI-RS reference signal set with an ID of 0 (first reference signal set) is associated with the CSI-RS reference signal sets with IDs of 1,3,5 (second reference signal sets). The bit value of the fourth indication information is 1, which indicates that the CSI-RS reference signal set with an ID of 0 (first reference signal set) is associated with the SSB reference signal sets with IDs of 1,3,5 (second reference signal sets), which shall not be illustrated herein one by one.

For example, in the reporting configuration information of the CSI-RS reference signal set with an ID of 0, the second indication information and the fourth indication information are included. The second indication information is a bitmap {0000 0000 0010 1010}, and a bit value of the fourth indication information is 0, which indicates that the CSI-RS reference signal set with an ID of 0 (the first reference signal set) is associated with the SSB reference signal sets with IDs of 1, 3 and 5 (the second reference signal sets), which shall not be illustrated herein one by one. Or, for the reporting configuration information of the CSI-RS reference signal set with an ID of 0 (first reference signal set), the second indication information is further included, which is a bitmap {0000 0000 0010 1010}. As the fourth indication information is not included, it indicates that the type of the second reference signal set is identical to the type of the first reference signal set, that is, it indicates that the CSI-RS reference signal set with an ID of 0 (first reference signal set) is associated with the CSI-RS reference signal sets with IDs of 1, 3 and 5 (second reference signal sets), which shall not be illustrated herein one by one.

Or, for the reporting configuration information of the CSI-RS reference signal set with an ID of 0 (first reference signal set), the second indication information is further included, which is {0000 0000 0010 1010}. A bit value of the fourth indication information is 0, which indicates that the CSI-RS reference signal set with an ID of 0 (first reference signal set) is associated with the CSI-RS reference signal sets with IDs of 1,3,5 (second reference signal sets). The bit value of the fourth indication information is 1, which indicates that the CSI-RS reference signal set with an ID of 0 (first reference signal set) is associated with the SSB reference signal sets with IDs of 1,3,5 (second reference signal sets), which shall not be illustrated herein one by one.

For example, for scenario (I), the AI model outputs a predicted quantity of all beams (pairs) by using a measured quantity of some beams (pairs). NZP-CSI-RS-RourceSet in the reporting configuration information element may be taken as the first reference signal set, and the second indication information may be added to indicate a prediction set (second reference signal set) of more than one reference signal with which the first reference signal set is associated. The second indication information may be more than one NZP-CSI-RS-RourceSetId configured in the reference signal configuration information element (and the fourth indication information may further be included).

For example, in scenario (I), the AI model outputs a predicted quantity of all beams (pairs) by using a measured quantity of some beams (pairs). In the reference signal configuration of each NZP-CSI-RS-RourceSet (first reference signal set) in the reference signal configuration information element, second indication information may be added to indicate the second reference signal set associated with the first reference signal set. The second indication information indicates more than one NZP-CSI-RS-RourceSetId (and the fourth indication information may further be included). In addition, first indication information may be added to the reference signal configuration information element to indicate that the first reference signal set is used for beam measurement or beam prediction.

For example, in scenario (II), the AI model outputs a predicted quantity of fine beams by using a measured quantity of wide beams (SSB). CSI-SSB-ResourceSet in the reporting configuration information element may be taken as the first reference signal set, and the second indication information may be added to indicate the second reference signal set associated with the first reference signal set. The second indication information may indicate more than one NZP-CSI-RS-RourceSetId (and the fourth indication information may further be included).

For example, in scenario (II), the AI model outputs a predicted quantity of fine beams by using a measured quantity of wide beams (SSB). In the reference signal configuration of each CSI-SSB-ResourceSet (first reference signal set) in the reference signal configuration information element, second indication information may be added to indicate the second reference signal set associated with the first reference signal set. The second indication information indicates more than one NZP-CSI-RS-RourceSetId (and the fourth indication information may further be included).

In some embodiments, after receiving the above reference signal configuration and reporting configuration, the terminal equipment performs beam measurement, and performs beam prediction by using the AI model, that is, performs measurement on the signals in the reference signal measurement set, obtains the measured quantity, inputs the measured quantity to the AI model deployed at the terminal equipment side, and obtains the predicted quantity. The measured quantity and predicted quantity may be L1-RSRP or an L1-SINR. The terminal equipment may generate a first report at least according to the first indication information and/or the second indication information and/or the fourth indication information, and transmit the first report to the network device. The first report is a reporting instance, and includes more than one report quantity, or includes more than one report quantity and reference signal resource indicators to which the report quantities correspond. The report quantities are obtained according to measurement and/or prediction, that is, the report quantities are measured quantities and/or predicted quantities. The reference signal resource indicators include synchronization signal block resource indicators (SSB resource indicators, SSB RIs) or channel state information reference signal resource indicators (CSI-RS resource indicators, CRIs). The reference signal resource indicators correspond to the second reference signal set and/or the first reference signal set. Or, in other words, reference signals to which the reference signal resource indicators correspond belongs to the second reference signal set and/or the first reference signal set.

In some embodiments, the first report may or may not include one or more third indication information and/or fifth indication information, the third indication information being used to indicate a third reference signal set, wherein the reference signal resource indicators correspond to the third reference signal set. The third reference signal set is one of the more than one second reference signal set and/or is the first reference signal set. That is, the third indication information is used to indicate the third reference signal set to which the reference signals to which the reference signal resource indicators correspond belong. The fifth indication information is used to indicate that a type of a reference signal in the third reference signal set is an SSB or a CSI-RS. The third indication information is at least an identifier of a reference signal set, or a bitmap. Reference may be made to the second indication information for a specific implementation, with a difference that only one bit in the bitmap is set to be the first specific value. Reference may be made to the fourth indication information for an implementation of the fifth indication information. The third indication information and/or the fifth indication information may be carried by uplink control information (UCI), and the fifth indication information corresponds to the third indication information one by one. Following examples shall be given by taking that the first reference signal set configured in the reporting configuration information is a measurement set of the reference signals and the second reference signal set is a prediction set of the reference signals as examples.

In some embodiments, when a first reference signal set is associated with one second reference signal set, the first report may not include the third indication information, that is, a reference signal set in which reference signals are indicated may be determined by the reference signal resource indicators in the first report. For example, when the first report includes only a measured quantity, reference signal resource indicators corresponding to the measured quantity correspond to the first reference signal set, that is, the reference signals corresponding to the reference signal resource indicators to which the measured quantity corresponds belong to the measurement set of the reference signals (first reference signal set). For example, when the first report includes only a predicted quantity, as one second reference signal set is associated with the first reference signal set, the second reference signal set is also known and uniquely determined according to the second indication information and/or the fourth indication information. The reference signal resource indicators corresponding to the predicted quantity correspond to the second reference signal set, that is, the reference signals corresponding to the reference signal resource indicators to which the predicted quantity corresponds belong to the prediction set of the reference signals (one associated second reference signal set), and no additional third indication information is needed to indicate the reference signal set to which the reference signals to which the predicted quantity corresponds belong. When the first report simultaneously includes the measured quantity and the predicted quantity, the first report may include the third indication information. When the first report simultaneously includes the measured quantity and the predicted quantity, the third reference signal set indicated by the third indication information corresponding to the reference signal resource indicators to which the measured quantity corresponds is the first reference signal set, reference signals corresponding to the reference signal resource indicators to which the measured quantity corresponds belong to the measurement set of the reference signals (first reference signal set), and the third reference signal set indicated by the third indication information corresponding to the reference signal resource indicators to which the predicted quantity corresponds is a second reference signal set, that is, the reference signals corresponding to the reference signal resource indicators to which the predicted quantity corresponds belong to the prediction set of the reference signals (one associated second reference signal set). Optionally, the first report may further include fifth indication information, the fifth indication information indicating that a type of a reference signal in the third reference signal set is an SSB or a CSI-RS. Thus, situations where corresponding reference signal sets are unable to be distinguished when the reference signal resource indicators to which the predicted quantity and the measured quantity correspond are identical may be avoided.

In some embodiments, when one first reference signal set is associated with multiple second reference signal sets, the first report may further include or not include more than one third indication and/or fifth indication.

In some embodiments, when the first report includes only a measured quantity, reference signal resource indicators corresponding to the measured quantity correspond to the first reference signal set, that is, the reference signals corresponding to the reference signal resource indicators to which the measured quantity corresponds belong to the measurement set of the reference signals (first reference signal set), an no third indication information needs to be included in the first report. When the first report includes only a predicted quantity, as the first reference signal set is associated with multiple second reference signal sets, the third indication information is needed to further indicate a prediction set (the third reference signal set, or a second reference signal set in multiple second reference signal sets) of reference signals to which reference signals corresponding to the reference signal resource indicators to which the predicted quantity corresponds belong. When the first report simultaneously includes the measured quantity and the predicted quantity, the third reference signal set indicated by the third indication information corresponding to the reference signal resource indicators to which the measured quantity corresponds is the first reference signal set, reference signals corresponding to the reference signal resource indicators to which the measured quantity corresponds belong to the measurement set of the reference signals (first reference signal set), and the third reference signal set indicated by the third indication information corresponding to the reference signal resource indicators to which the predicted quantity corresponds is a second reference signal set, that is, the reference signals corresponding to the reference signal resource indicators to which the predicted quantity corresponds belong to the prediction set of the reference signals (one associated second reference signal set). Optionally, the first report may further include fifth indication information, the fifth indication information indicating that a type of a reference signal in the third reference signal set is an SSB or a CSI-RS. Thus, situations where corresponding reference signal sets are unable to be distinguished when the reference signal resource indicators to which the predicted quantity and the measured quantity correspond are identical may be avoided.

In some embodiments, the first report includes one third indication information, and all reference signal resource indicators in the first report correspond to the third reference signal set indicated by the third indication information.

For example, when the first report includes only one predicted quantity, the predicted quantity corresponds to a prediction set of one reference signal, and one third indication information is used to indicate a prediction set (third reference signal set) of reference signals to which reference signals corresponding to the reference signal resource indicators to which the predicted quantity corresponds belong.

For example, when the first report includes only multiple predicted quantities, the multiple predicted quantities may correspond to one prediction set of reference signals. For example, in an inference process of an AI model, an output predicted quantity of the AI model corresponds to beams (pairs) to which one prediction set of reference signals corresponds. Thus, one third indication information may be used to uniformly indicate a prediction set of reference signals (third reference signal set) to which reference signals corresponding to reference signal resource indicators to which all the predicted quantities correspond belong. As shown in Table 1 below, the first report includes four beams (pairs), i.e. four SSB-RI/CRIs, each beam (pair) corresponding to one report quantity. SSB-RI/CRI #1 corresponds to a report quantity L1-RSRP #1, SSB-RI/CRI #2 corresponds to a report quantity L1-RSRP #2, SSB-RI/CRI #3 corresponds to a report quantity L1-RSRP #3, and SSB-RI/CRI #4 corresponds to a report quantity L1-RSRP #4. When all of the four report quantities are predicted quantities and the four predicted quantities correspond to one prediction set of reference signals, Table 1 includes one third indication information, the third indication information indicating one second reference signal set (a prediction set of reference signals), and reference signals to which the four SSB-RI/CRIs correspond belong to the one second reference signal set.

**Table 1**

| Third indication information |
|---|
| **SSB-RI/CRI #1** |
| **SSB-RI/CRI #2** |
| **SSB-RI/CRI #3** |
| **SSB-RI/CRI #4** |
| **L1-RSRP #1** |
| **L1-RSRP #2** |
| **L1-RSRP #3** |
| **L1-RSRP #4** |

In some embodiments, the first report includes multiple (Y) third indication information, one of which being used to indicate one third reference signal set, and the one or more (Z) reference signal resource indicators in the first report correspond(s) to the third reference signal set indicated by the third indication information.

For example, when the first report includes one predicted quantity and one or more measured quantities, the one predicted quantity corresponds to one prediction set of reference signals. One third indication information is used to indicate a prediction set of reference signals (the third reference signal set is a second reference signal set) to which reference signals corresponding to reference signal resource indicators to which the one predicted quantity corresponds belong, and another third indication information is used to indicate a measurement set of reference signals (the third reference signal set is the first reference signal set) to which reference signals indicated by the reference signal resource indication information to which the one or more measured quantities correspond belong. Optionally, the fifth indication information may also be used to indicate that a type of a reference signal in the third reference signal set is an SSB or a CSI-RS.

For example, when the first report includes only multiple predicted quantities, the multiple (X) predicted quantities may correspond to multiple (Y) reference signal prediction sets; where, X is greater than or equal to Y. For example, in a monitoring process of AI models, when the terminal equipment supports multiple beam prediction models and/or functions, different AI models and/or functions use measured quantities of reference signals in the same reference signal measurement set, and predicted quantities of beams (pairs) to which prediction sets of identical or different dimensions correspond may be obtained. In the first report, predicted quantities of multiple functions and/or models are included, hence, multiple (Y) third indication information are needed to indicate prediction sets of reference signals (third reference signal set) to which reference signals corresponding to reference signal resource indicators to which respective predicted quantity of each model and/or function corresponds.

As shown in Table 2 below, one third indication information indicates a prediction set of reference signals (third reference signal set) to which reference signals corresponding to a reference signal resource indicator to which one predicted quantity corresponds. The first report includes four beams (pairs), i.e. four SSB-RI/CRIs, each beam (pair) corresponding to one report quantity. SSB-RI/CRI #1 corresponds to a report quantity L1-RSRP #1, SSB-RI/CRI #2 corresponds to a report quantity L1-RSRP #2, SSB-RI/CRI #3 corresponds to a report quantity L1-RSRP #3, and SSB-RI/CRI #4 corresponds to a report quantity L1-RSRP #4. When all of the four report quantities are predicted quantities and reference signals corresponding to reference signal resource indicators to which the four predicted quantities correspond belong to identical or different prediction sets of reference signals, Table 2 includes four third indication information, each of which indicating one third reference signal set (a prediction set of reference signals), corresponding respectively to a predicted quantity of one function and/or model.

**Table 2(only a predicted quantity is included)**

| | |
|---|---|
| Third indication information | **SSB-RI/CRI #1** |
| Third indication information | **SSB-RI/CRI #2** |
| Third indication information | **SSB-RI/CRI #3** |
| Third indication information | **SSB-RI/CRI #4** |
| **L1-RSRP #1** | |
| **L1-RSRP #2** | |
| **L1-RSRP #3** | |
| **L1-RSRP #4** | |

For example, when the first report includes more than one measured quantity and multiple prediction quantities, the more than one measured quantity correspond to one prediction set of reference signals, and the multiple (X) prediction quantities may correspond to multiple (Y) prediction sets of reference signals; where, X is greater than or equal to Y. Thus, multiple (Y) third indication information are needed to indicate prediction sets of reference signals (the third reference signal set is a second reference signal set) to which reference signals corresponding to reference signal resource indicators to which respective predicted quantity of each model and/or function corresponds belong, and more than one third indication information are needed to indicate measurement sets of reference signals (the third reference signal set is the first reference signal set) to which reference signals corresponding to reference signal resource indicators to which more than one measured quantity correspond belong. Optionally, the fifth indication information may also be used to indicate that a type of a reference signal in the third reference signal set is an SSB or a CSI-RS.

As shown in Table 3 below, L1-RSRP #1 and #2 are measured quantities, L1-RSRP #3 and #4 are predicted quantities, and Table 2 includes four third indication information, the third indication information indicating one third reference signal set (a prediction set of reference signals). Wherein, reference signals to which SSB-RI/CRI #3 and 4 correspond belong to reference signals in identical or different third reference signal sets (a second reference signal set) indicated by their respective third indication information, and reference signals to which SSB-RI/CRI #1 and 2 correspond belong to reference signals in identical third reference signal sets (first reference signal set) indicated by their respective third indication information. A difference from Table 2 is that, optionally, the first report may further include fifth indication information corresponding to the third indication information one by one, which is used to indicate a type of a reference signal in the third reference signal set is an SSB or a CSI-RS.

**Table 3 (measured quantities and predicted quantities are included)**

| | |
|---|---|
| Third indication information+fifth indication information (indicating the first reference signal set) | **SSB-RI/CRI #1** |
| Third indication information+fifth indication information (indicating the first reference signal set) | **SSB-RI/CRI #2** |
| Third indication information+fifth indication information (indicating the second reference signal set) | **SSB-RI/CRI #3** |
| Third indication information+fifth indication information (indicating the second reference signal set) | **SSB-RI/CRI #4** |
| **L1-RSRP #1** | |
| **L1-RSRP #2** | |
| **L1-RSRP #3** | |
| **L1-RSRP #4** | |

For example, one third indication information indicates a third reference signal set to which reference signals corresponding to reference signal resource indicators to which multiple (Z) measured quantities or predicted quantities correspond belong. As shown in Table 4 below, the first report includes four beams (pairs), i.e. four SSB-RI/CRIs, each beam (pair) corresponding to one report quantity. SSB-RI/CRI #1 corresponds to a report quantity L1-RSRP #1, SSB-RI/CRI #2 corresponds to a report quantity L1-RSRP #2, SSB-RI/CRI #3 corresponds to a report quantity L1-RSRP #3, and SSB-RI/CRI #4 corresponds to a report quantity L1-RSRP #4. When all the four report quantities are predicted quantities and the four predicted quantities correspond to two different prediction sets of reference signals, Table 4 includes two third indication information, each indicating one third reference signal set (a prediction set of reference signals, one second reference signal set), corresponding to two reference signal resource indicators, that is, SSB-RI/CRI #1 and #2 correspond to identical prediction set of reference signals, or, all reference signals indicated by SSB-RI/CRI #1 and #2 belong to one prediction set of reference signals, and SSB-RI/CRI #3 and #4 correspond to identical prediction set of reference signals, or, all reference signals indicated by SSB-RI/CRI #3 and #4 belong to another prediction set of reference signals.

**Table 4**

| | |
|---|---|
| Third indication information | **SSB-RI/CRI #1** |
| **NA** | **SSB-RI/CRI #2** |
| Third indication information | **SSB-RI/CRI #3** |
| **NA** | **SSB-RI/CRI #4** |
| **L1-RSRP #1** | |
| **L1-RSRP #2** | |
| **L1-RSRP #3** | |
| **L1-RSRP #4** | |

Or, as shown in Table 5 below, a difference from Table 4 is that L1-RSRP #1 and #2 are measured quantities, and L1-RSRP #3 and #4 are predicted quantities. Table 5 includes two third indication information, each indicating one third reference signal set. A third reference signal set indicated by one third indication information to which SSB-RI/CRI #1 and #2 correspond is the first reference signal set, and SSB-RI/CRI #1 and #2 correspond to identical measurement set of reference signals, or in other words, all reference signals indicated by SSB-RI/CRI #1 and #2 belong to one measurement set of reference signals. A third reference signal set indicated by one third indication information to which SSB-RI/CRI #3 and #4 correspond is one second reference signal set, and SSB-RI/CRI #3 and #4 correspond to identical prediction set of reference signals, or in other words, reference signals indicated by SSB-RI/CRI #3 and #4 belong to one prediction set of reference signals. A difference from Table 4 is that, optionally, the first report may further include fifth indication information corresponding to the third indication information one by one, which is used to indicate that a type of a reference signal in the third reference signal set is an SSB or a CSI-RS.

**Table 5**

| | |
|---|---|
| Third indication information+fifth indication information (indicating the first reference signal set) | **SSB-RI/CRI #1** |
| **NA** | **SSB-RI/CRI #2** |
| Third indication information+fifth indication information (indicating the second reference signal set) | **SSB-RI/CRI #3** |
| **NA** | **SSB-RI/CRI #4** |
| **L1-RSRP #1** | |
| **L1-RSRP #2** | |
| **L1-RSRP #3** | |
| **L1-RSRP #4** | |

For example, one third indication information indicates a third reference signal set to which reference signals corresponding to reference signal resource indicators to which multiple (Z) predicted quantities correspond belong. In this example, the first report further includes group identifiers corresponding to each report quantity, reporting may be performed in a form of groups. For example, as shown in Table 6 below, the first report includes 4 beams (pairs), i.e. 4 SSB-RI/CRIs, each beam (pair) corresponding to one report quantity. SSB-RI/CRI #1 corresponds to a report quantity L1-RSRP #1, SSB-RI/CRI #2 corresponds to a report quantity L1-RSRP #2, SSB-RI/CRI #3 corresponds to a report quantity L1-RSRP #3, and SSB-RI/CRI #4 corresponds to a report quantity L1-RSRP #4. All the four report quantities are predicted quantities, and the four predicted quantities correspond to two different prediction sets of reference signals. Table 6 includes two third indication information, each of which indicating one third reference signal set (a prediction set of reference signals), corresponding respectively to reference signal resource indicators corresponding to one group of predicted quantities, that is, L1-RSRP #1 and #3 are in a group. Hence, one third indication information is used to indicate a third reference signal set corresponding to the reference signal resource indicators SSB-RI/CRI #1 and #3 to which the group corresponds. All reference signals indicated by SSB-RI/CRI #1 and #3 belong to one prediction set of reference signals, and L1-RSRP #2 and #4 are in a group. Hence, another one third indication information is used to indicate a third reference signal set corresponding to the reference signal resource indicators SSB-RI/CRI #2 and #4 to which the group corresponds, and reference signals indicated by SSB-RI/CRI #2 and #4 belong to another prediction set of reference signals.

**Table 6**

| | |
|---|---|
| Third indication information | SSB-RI/CRI #1 Group 1 |
| Third indication information | SSB-RI/CRI #2 Group 2 |
| **NA** | SSB-RI/CRI #3 Group 1 |
| **NA** | SSB-RI/CRI #4 Group 2 |
| **L1-RSRP #1** Group 1 | |
| **L1-RSRP #2** Group 2 | |
| **L1-RSRP #3** Group 1 | |
| **L1-RSRP #4** Group 2 | |

It should be noted that in Table 3 and Table 5, when the first report includes both a predicted quantity and a measured quantity, using the fifth indication information to indicate that the type of the reference signals in the third reference signal set is an SSB or a CSI-RS may avoid situations where corresponding reference signal sets are unable to be distinguished when the reference signal resource indicators to which the predicted quantity and the measured quantity correspond are identical. However, the embodiments of this disclosure are not limited thereto, and a predefined method may be used to distinguish the predicted quantity and the measured quantity, or, sixth indication information may further be added to indicate whether a type of the report quantity is a predicted quantity or a measured quantity, thereby distinguishing the reference signal set to which the reference signals corresponding to the reference signal resource indicator to which the predicted quantity and the measured quantity correspond belong, which shall not be illustrated herein one by one.

In addition, the measured quantity and the predicted quantity included in the first report in the above embodiments may be optimal predetermined numbers of measured quantities and predicted quantities obtained according to measurement and/or prediction; however, the embodiments of this disclosure are not limited thereto.

In the above embodiment, a relationship between the first reference signal set and the second reference signal set is configured via additional signaling between the terminal equipment and the network device; however, the embodiments of this disclosure are not limited thereto. The network device may not configure the second indication information, and the terminal equipment may select one or more third reference signal sets from multiple reference signal sets configured by the network device according to characteristics of the AI model and/or function, and add more than one third indication information to the first report to indicate the selected third reference signal set(s). wherein, the reference signal resource indicators correspond to the third reference signal set(s). The third reference signal set(s) is/are one of the more than one second reference signal set and/or is the first reference signal set, that is, the third indication information is used to indicate the third reference signal set to which the reference signals corresponding to the reference signal resource indicators belong.

For example, an input dimension of the AI model is 16 and an output dimension thereof is 64, that is, measured quantities of 16 reference signals (16 beams (pairs)) are input into the AI model to obtain predicted quantities of 64 reference signals (64 beams (pairs)). At this time, in the reporting configuration information, the network device configures a reference signal set containing 16 reference signals for the terminal equipment, and indicates that the reference signal set is used for beam measurement. The terminal equipment may select one or more reference signal sets containing 64 reference signals from multiple reference signal sets configured by the network device in the reference signal configuration information and take the reference signal set(s) as the prediction set(s) of reference signals (third reference signal set) of the AI model. At this point, more than one third indication information indicating the one or more third reference signal sets are added to the first report. An implementation of the third indication information is as described above. Optionally, the terminal equipment may further transmit fifth indication information in the first report to indicate a type of the reference signals in the third reference signal set is an SSB or a CSI-RS, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

With the above embodiment, the network device establishes association between the measurement set of the reference signals and the prediction set of the reference signals via the second indication information, such that the terminal equipment, in reporting the report quantity, is able to correctly indicate the information of beams (pairs) to which the report quantity corresponds, i.e. reference signal resources in the reference prediction set, thereby solving the above problems in the related art. Or, the terminal equipment, by newly adding the third indication information to a reporting instance, indicates the reference signal set to which the reference signal resource indication corresponding to the report quantity corresponds, such that the terminal equipment, in reporting the report quantity, is able to correctly indicate the information of beams (pairs) to which the report quantity corresponds, i.e. reference signal resources in the reference prediction set, thereby solving the above problems in the related art.

### Embodiments of a second aspect

The embodiments of this disclosure provide an information transceiving method, which shall be described from a terminal equipment side, with contents identical to those in the embodiments of the first aspect being not going to be repeated herein any further.

FIG. 3 is a schematic diagram of the information transceiving method of the embodiments of this disclosure. As shown in FIG. 3, the method includes:
301: the terminal equipment receives reference signal set configuration information and reporting configuration information transmitted by a network device, the reference signal set including a first reference signal set and/or a second reference signal set; and
302: the terminal equipment transmits a first report to the network device.

It should be noted that FIG. 3 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 3.

In some embodiments, implementations of 301-302 corresponds to those of 201-202, and the terminal equipment may further receive first indication information and/or second indication information and/or fourth indication information transmitted by the network device, and reference may be made to the embodiments of the first aspect for implementations of the first indication information, the second indication information and the fourth indication information, which shall not be repeated herein any further.

In some embodiments, the first report further includes one or more third indication information and/or one or more fifth indication information, and reference may be made to the embodiments of the first aspect for implementations of the fifth indication information, the third indication information and the first report, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

With the above embodiment, the network device establishes association between the measurement set of the reference signals and the prediction set of the reference signals via the second indication information, such that the terminal equipment, in reporting the report quantity, is able to correctly indicate the information of beams (pairs) to which the report quantity corresponds, i.e. reference signal resources in the reference prediction set, thereby solving the above problems in the related art. Or, the terminal equipment, by newly adding the third indication information to a reporting instance, indicates the reference signal set to which the reference signal resource indication corresponding to the report quantity corresponds, such that the terminal equipment, in reporting the report quantity, is able to correctly indicate the information of beams (pairs) to which the report quantity corresponds, i.e. reference signal resources in the reference prediction set, thereby solving the above problems in the related art.

The information transceiving methods between the terminal equipment and the network device in the first to second embodiments are as follows:

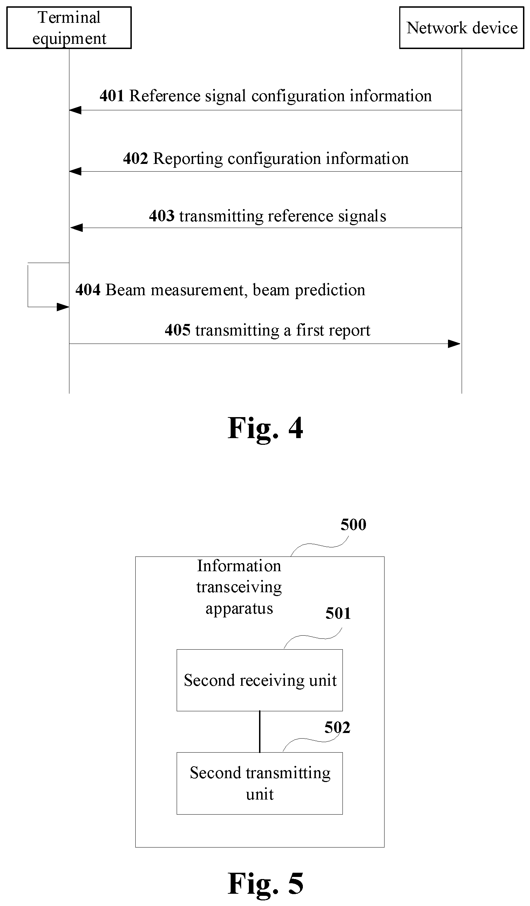

FIG. 4 is a schematic diagram of the information transceiving method in scenario 1 of the embodiments of this disclosure. As shown in FIG. 4, the method includes:
401: the network device transmits reference signal configuration information to the terminal equipment;
402: the network device transmits reporting configuration information to the terminal equipment;
403: the network device transmits reference signals to the terminal equipment;
404: the terminal equipment performs beam measurement based on the received reference signals to obtain a measured quantity, and performs beam prediction by using an AI model to obtain a predicted quantity; and
405: the terminal equipment transmits a first report to the network device.

In one implementation, the second indication information (optionally, the fourth indication information may further be included) may be carried in the reference signal configuration information element in 401 or the reporting configuration information element in 402. In 405, the terminal equipment generates the first report at least according to the second indication information and/or the fourth indication information. Optionally, the first indication information may be carried in the reference signal configuration information element in 401 or the reporting configuration information element in 402, or the first indication information and/or the second indication information and/or the fourth indication information may be carried by other signaling.

In one implementation, the second indication information (optionally, the fourth indication information may further be included) may be carried in the reference signal configuration information element in 401 or the reporting configuration information element in 402. In 405, the terminal equipment generates a first report at least according to the second indication information and/or the fourth indication information, and the first report further includes third indication information (optionally, the fifth indication information may further be included). Optionally, the first indication information may be carried in the reference signal configuration information element in 401 or the reporting configuration information element in 402, or the first indication information and/or the second indication information and/or the fourth indication information may be carried by other signaling.

In one implementation, the second indication information is not transmitted. In 405, the first report further includes third indication information (optionally, the fifth indication information may further be included). Optionally, the first indication information may be carried by the reference signal configuration information element in 401 or the reporting configuration information element in 402, or the first indication information may be carried by other signaling.

### Embodiments of a third aspect

The embodiments of this disclosure provide an information transceiving apparatus. The apparatus may be, for example, a terminal equipment, or may be one or some components or assemblies configured in the terminal equipment, with contents identical to those in the embodiments of the second aspect being not going to be described herein any further.

FIG. 5 is a schematic diagram of the information transceiving apparatus of the embodiments of this disclosure. As shown in FIG. 5, the information transceiving apparatus 500 includes:
a second receiving unit 501 configured to receive reference signal set configuration information and reporting configuration information transmitted by a network device, the reference signal set including a first reference signal set and/or a second reference signal set; and
a second transmitting unit 502 configured to transmit a first report to the network device.

In some embodiments, reference may be made to the embodiments of the first aspect for implementations of the second receiving unit 501 and the second transmitting unit 502, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information transceiving apparatus 500 may further include other components or modules, and reference may be made to related techniques for particulars of these components or modules.

Furthermore, for the sake of simplicity, connection relationships between the components or modules or signal profiles thereof are only illustrated in FIG. 5. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

### Embodiments of a fourth aspect

The embodiments of this disclosure provide an information transceiving apparatus. The apparatus may be, for example, a network device, or may be one or some components or assemblies configured in the network device, with contents identical to those in the embodiments of the first or fourth aspect being not going to be described herein any further.

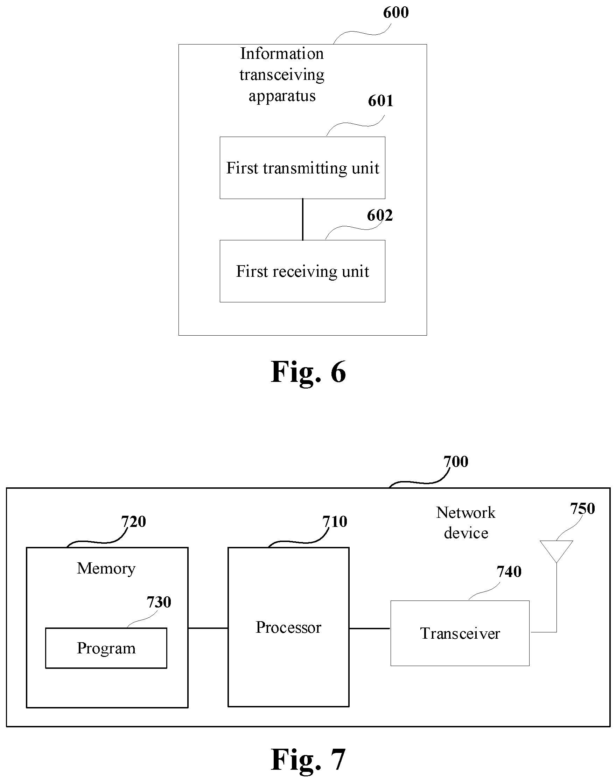

FIG. 6 is a schematic diagram of the information transceiving apparatus of the embodiments of this disclosure. As shown in FIG. 6, the information transceiving apparatus 600 includes:
a first transmitting unit 601 configured to transmit reference signal set configuration information and reporting configuration information to a terminal equipment, the reference signal set including a first reference signal set and/or a second reference signal set; and
a first receiving unit 602 configured to receive a first report from the terminal equipment.

In some embodiments, reference may be made to the embodiments of the first or the fourth aspect for implementations of the first transmitting unit 601 and the first receiving unit 602, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information transceiving apparatus 600 may further include other components or modules, and reference may be made to related techniques for particulars of these components or modules.

Furthermore, for the sake of simplicity, connection relationships between the components or modules or signal profiles thereof are only illustrated in FIG. 6. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

### Embodiments of a fifth aspect

The embodiments of this disclosure provide a communication system, and reference may be made to FIG. 1, with contents identical to those in the embodiments of the first to the fourth aspects being not going to be described herein any further.

In some embodiments, the communication system 100 may at least include a network device 101 and/or a terminal equipment 102, the network device 101 including the information transceiving apparatus 600 in the embodiments of the fourth aspect, and the terminal equipment 102 including the information transceiving apparatus 500 in the embodiments of the fifth aspect, which shall not be repeated herein any further.

The embodiments of this disclosure further provide a network device, which may be, for example, a base station. However, this disclosure is not limited thereto, and it may also be another network device.

FIG. 7 is a schematic diagram of a structure of the network device of the embodiments of this disclosure. As shown in FIG. 7, the network device 700 may include a processor 710 (such as a central processing unit (CPU)) and a memory 720, the memory 720 being coupled to the processor 710. Wherein, the memory 720 may store various data, and furthermore, it may store a program 730 for information processing, and execute the program 730 under control of the processor 710.

For example, the processor 710 may be configured to execute a program to carry out the information transceiving method in the embodiments of the first aspect.

Furthermore, as shown in FIG. 7, the network device 700 may include a transceiver 740, and an antenna 750, etc. Wherein, functions of the above components are similar to those in the related art, and shall not be described herein any further. It should be noted that the network device 700 does not necessarily include all the parts shown in FIG. 7, and furthermore, the network device 700 may include parts not shown in FIG. 7, and the related art may be referred to.

The embodiments of this disclosure further provide a terminal equipment; however, this disclosure is not limited thereto, and it may also be another equipment.

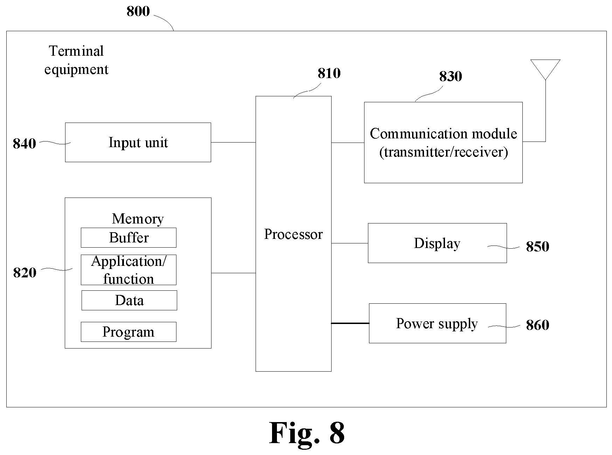

FIG. 8 is a schematic diagram of the terminal equipment of the embodiments of this disclosure. As shown in FIG. 8, the terminal equipment may include a processor 810 and a memory 820, the memory 820 storing data and a program and being coupled to the processor 810. It should be noted that this figure is illustrative only, and other types of structures may also be used, so as to supplement or replace this structure and achieve a telecommunications function or other functions.

For example, the processor 810 may be configured to execute a program to carry out the information transceiving method in the embodiments of the second aspect.

As shown in FIG. 8, the terminal equipment 800 may further include a communication module 830, an input unit 840, a display 850, and a power supply 860; wherein functions of the above components are similar to those in the related art, which shall not be described herein any further. It should be noted that the terminal equipment 800 does not necessarily include all the parts shown in FIG. 8, and the above components are not necessary. Furthermore, the terminal equipment 800 may include parts not shown in FIG. 8, and the related art may be referred to.

Embodiments of this disclosure provide a computer program, which, when executed in a terminal equipment, will cause the terminal equipment to carry out the information transceiving method as described in the embodiments of the second aspect.

Embodiments of this disclosure provide a storage medium, including a computer program, which will cause a terminal equipment to carry out the information transceiving method as described in the embodiments of the second aspect.

Embodiments of this disclosure provide a computer program, which, when executed in a network device, will cause the network device to carry out the information transceiving method as described in the embodiments of the first aspect.

Embodiments of this disclosure provide a storage medium, including a computer program, which will cause a network device to carry out the information transceiving method as described in the embodiments of the first aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

As to implementations containing the above embodiments, following supplements are further disclosed.
1. An information transceiving method, applicable to a network device, characterized in that the method includes:
   Transmitting reference signal set configuration information and reporting configuration information to a terminal equipment, the reference signal set including a first reference signal set and/or a second reference signal set; and
   receiving a first report from the terminal equipment.
2. The method according to supplement 1, wherein the method further includes:
   transmitting first indication information by the network device to the terminal equipment, the first indication information indicating that the first reference signal set is at least used for beam measurement or beam prediction.
3. The method according to supplement 1 or 2, wherein the method further includes:
   transmitting second indication information by the network device to the terminal equipment, the second indication information indicating more than one second reference signal set, the more than one second reference signal set being associated with the first reference signal set; or,
   transmitting second indication information and fourth indication information by the network device to the terminal equipment, the second indication information indicating more than one second reference signal set, the more than one second reference signal set being associated with the first reference signal set, and the fourth indication information being used to indicate that a type of a reference signal in the second reference signal set is identical to or different from a type of a reference signal in the first reference signal set, or the fourth indication information being used to indicate that a type of a reference signal in the second reference signal set is an SSB or a CSI-RS.
4. The method according to any one of supplements 1-3, wherein the first report includes more than one report quantity or more than one report quantity and reference signal resource indicators to which the report quantities correspond, the report quantities being obtained according to measurement and/or prediction.
5. The method according to supplement 4, wherein the report quantities obtained according to the prediction are obtained by the terminal equipment at least according to an AI model deployed in the terminal equipment.
6. The method according to supplement 4 or 5, wherein the reference signal resource indicators correspond to the second reference signal set and/or the first reference signal set.
7. The method according to any one of supplements 4-6, wherein the first report further includes more than one third indication information used to indicate a third reference signal set, wherein the reference signal resource indicators correspond to the third reference signal set; or,
   the first report further includes more than one third indication information and more than one fifth indication information, wherein the third indication information is used to indicate a third reference signal set, the reference signal resource indicators correspond to the third reference signal set, and the fifth indication information is used to indicate that a type of a reference signal in the third reference signal set is an SSB or a CSI-RS.
7a. The method according to supplement 7, wherein the more than one third indication information correspond to the more than one fifth indication information one by one.
8. The method according to supplement 7, wherein the third reference signal set is one second reference signal set in the more than one second reference signal set and/or is the first reference signal set.
9. The method according to any one of supplements 3-7, wherein the second indication information and/or the third indication information is/are at least a reference signal set identifier/reference signal set identifiers, or a bitmap/bitmaps.
10. The method according to supplement 9, wherein a length of the bitmap is related to a configured maximum number of reference signal sets, and a bit value of the bitmap is used to indicate whether a corresponding reference signal set is or is not the second reference signal set or the third reference signal set.
11. The method according to any one of supplements 1-10, wherein the second reference signal set is at least used for beam measurement or beam prediction.
12. The method according to any one of supplements 1-11, wherein more than one fourth reference signal set with which the first reference signal set is associated is obtained at least via a feature/feature group of the terminal equipment or a capability report of the terminal equipment.
13. The method according to supplement 12, wherein the more than one second reference signal set is a part or all of reference signal sets in the more than one fourth reference signal set.
14. The method according to any one of supplements 2-13, wherein the first indication information and/or the second indication information and/or the fourth indication information is/are carried by RRC and/or an MAC CE and/or DCI, and/or, the third indication information and/or the fifth indication information is/are carried by UCI.
15. The method according to any one of supplements 4-14, wherein the report quantity includes L1-RSRP (layer 1 reference signal receiving power) or an L1-SINR (layer 1 signal to interference plus noise ratio).
16. The method according to any one of supplements 7-15, wherein the first report includes one third indication information, and all reference signal resource indicators in the first report correspond to the third reference signal set indicated by the third indication information.
17. The method according to any one of supplements 7-15, wherein the first report includes multiple third indication information, wherein one third indication information is used to indicate one third reference signal set, and the one or more reference signal resource indicators in the first report correspond to the third reference signal set indicated by the third indication information.
18. The method according to any one of supplements 4-17, wherein the first report is generated at least according to the first indication information and/or the second indication information and/or the fourth indication information.
19. The method according to any one of supplements 1-18, wherein a type of a reference signal in the first reference signal set and/or the second reference signal set is an SSB or a CSI-RS.
20. An information transceiving method, applicable to a terminal equipment, characterized in that the method includes:
   receiving reference signal set configuration information and reporting configuration information transmitted by a network device, the reference signal set including a first reference signal set and/or a second reference signal set; and
   transmitting a first report to the network device.
21. The method according to supplement 20, wherein the method further includes:
   further receiving, by the terminal equipment, first indication information transmitted by the network device, the first indication information indicating that the first reference signal set is at least used for beam measurement or beam prediction; and/or
   receiving second indication information transmitted by the network device, the second indication information indicating more than one of the second reference signal set, the more than one of the second reference signal set being associated with the first reference signal set; and/or
   receiving second indication information and fourth indication information transmitted by the network device, the second indication information indicating more than one of the second reference signal set, the more than one of the second reference signal set being associated with the first reference signal set, and the fourth indication information being used to indicate that a type of a reference signal in the second reference signal set is identical to or different from a type of a reference signal in the first reference signal set, or, the fourth indication information being used to indicate that a type of a reference signal in the second reference signal sets is an SSB or a CSI-RS.
22. The method according to supplement 20 or 21, wherein the first report further includes more than one third indication information, the third indication information being used to indicate a third reference signal set, wherein the reference signal indicators correspond to the third reference signal set one by one; or
   the first report further includes more than one third indication information and more than one fifth indication information, the third indication information being used to indicate a third reference signal set, wherein the reference signal indicators correspond to the third reference signal set one by one, and the fifth indication information is used to indicate that a type of a reference signal in the third reference signal set is an SSB or a CSI-RS.
23. A network device, including a memory and a processor, the memory storing a computer program, and the processor being configured to execute the computer program to carry out the method as described in any one of supplements 1-19.
24. A terminal equipment, including a memory and a processor, the memory storing a computer program, and the processor being configured to execute the computer program to carry out the method as described in any one of supplements 20-22.

## Claims

1. An information transceiving apparatus, applicable to a network device, **characterized in that** the apparatus comprises:
a first transmitting unit configured to transmit reference signal set configuration information and reporting configuration information to a terminal equipment, the reference signal set comprising a first reference signal set and/or a second reference signal set; and
a first receiving unit configured to receive a first report from the terminal equipment.

2. The apparatus according to claim 1, wherein the first transmitting unit is further configured to transmit first indication information to the terminal equipment, the first indication information indicating that the first reference signal set is at least used for beam measurement or beam prediction.

3. The apparatus according to claim 1, wherein the first transmitting unit is further configured to transmit second indication information to the terminal equipment, the second indication information indicating more than one second reference signal set, the more than one second reference signal set being associated with the first reference signal set; or,
the first transmitting unit is further configured to transmit second indication information and fourth indication information to the terminal equipment, the second indication information indicating more than one second reference signal set, the more than one second reference signal set being associated with the first reference signal set, and the fourth indication information being used to indicate that a type of a reference signal in the second reference signal set is identical to or different from a type of a reference signal in the first reference signal set, or the fourth indication information being used to indicate that a type of a reference signal in the second reference signal set is an SSB (synchronization signal block) or a CSI-RS (channel state information reference signal).

4. The apparatus according to claim 1 or 3, wherein the first report comprises more than one report quantity or comprises more than one report quantity and reference signal resource indicators to which the report quantities correspond, the report quantities being obtained according to measurement and/or prediction.

5. The apparatus according to claim 4, wherein the report quantities obtained according to the prediction are obtained by the terminal equipment at least according to an AI model deployed in the terminal equipment.

6. The apparatus according to claim 4, wherein the reference signal resource indicators correspond to the second reference signal set and/or the first reference signal set.

7. The apparatus according to claim 4, wherein the first report further comprises more than one third indication information used to indicate a third reference signal set, wherein the reference signal resource indicators correspond to the third reference signal set; or,
the first report further comprises more than one third indication information and more than one fifth indication information, wherein the third indication information is used to indicate a third reference signal set, the reference signal resource indicators correspond to the third reference signal set, and the fifth indication information is used to indicate that a type of a reference signal in the third reference signal set is an SSB or a CSI-RS.

8. The apparatus according to claim 7, wherein the third reference signal set is one second reference signal set in the more than one second reference signal set and/or is the first reference signal set.

9. The apparatus according to claim 3 or 7, wherein the second indication information and/or the third indication information is/are at least a reference signal set identifier/reference signal set identifiers, or a bitmap/bitmaps.

10. The apparatus according to claim 9, wherein a length of the bitmap is related to a configured maximum number of reference signal sets, and a bit value of the bitmap is used to indicate whether a corresponding reference signal set is or is not the second reference signal set or the third reference signal set.

11. The apparatus according to claim 1 or 2, wherein the second reference signal set is at least used for beam measurement or beam prediction.

12. The apparatus according to claim 1 or 3, wherein more than one fourth reference signal set with which the first reference signal set is associated is obtained at least via a features/a feature group of the terminal equipment or a capability report of the terminal equipment.

13. The apparatus according to claim 12, wherein the more than one second reference signal set is a part or all of reference signal sets in the more than one fourth reference signal set.

14. The apparatus according to claim 2 or 3 or 7, wherein the first indication information and/or the second indication information and/or the fourth indication information is/are carried by RRC (radio resource control) and/or an MAC CE (media access control control element) and/or DCI (downlink control information), and/or, the third indication information and/or the fifth indication information is/are carried by UCI (uplink control information).

15. The apparatus according to claim 4, wherein the report quantity comprises L1-RSRP (layer 1 reference signal receiving power) or L1-SINR (layer 1 signal to interference plus noise ratio).

16. The apparatus according to claim 7, wherein the first report comprises one third indication information, and all reference signal resource indicators in the first report correspond to the third reference signal set indicated by the third indication information.

17. The apparatus according to claim 7, wherein the first report comprises multiple third indication information, wherein one third indication information is used to indicate one third reference signal set, and the one or more reference signal resource indicators in the first report correspond to the third reference signal set indicated by the one third indication information.

18. The apparatus according to claim 7, **characterized in that** the more than one third indication information correspond to the more than fifth indication information one by one.

19. An information transceiving apparatus, applicable to a terminal equipment, **characterized in that** the apparatus comprises:
a second receiving unit configured to receive reference signal set configuration information and reporting configuration information transmitted by a network device, the reference signal set comprising a first reference signal set and/or a second reference signal set; and
a second transmitting unit configured to transmit a first report to the network device.

20. A communication system, comprising a network device as claimed in claim 1 and/or a terminal equipment as claimed in claim 19.
